# EUROPEAN PATENT SPECIFICATION

(11) **EP 2 094 981 B1**
(45) Date of publication and mention of the grant of the patent: **18.08.2010**
(21) Application number: 07846415.3
(22) Date of filing: 14.12.2007
(51) Int. Cl.: F16C 19/14, F16C 19/34, F16C 19/54, F16C 33/38, F16C 33/46, F03D 11/00, F16C 33/51

(54) **A BEARING AND METHOD FOR TRANSFERRING FORCES THROUGH A BEARING OF A WIND TURBINE**
LAGER UND VERFAHREN ZUR ÜBERTRAGUNG VON KRÄFTEN DURCH EIN LAGER EINER WINDTURBINE
ROULEMENT ET PROCEDE PERMETTANT DE TRANSFERER DES FORCES AU NIVEAU D'UN ROULEMENT D'UNE TURBINE EOLIENNE

(30) Priority: 18.12.2006 DK 200601659
(43) Date of publication of application: 02.09.2009
(73) Proprietor: Vestas Wind Systems A/S, 8940 Randers - SV (DK)
(72) Inventor: ANDERSEN, Jesper Lykkegaard, 8900 Randers (DK)
(74) Representative: Schmidt, Jens Joergen
(86) International application number: PCT/DK2007/000545
(87) International publication number: WO 2008/074322

(56) References cited:
- EP-A- 1 724 480
- WO-A-2007/003866
- DE-A1- 3 800 729
- DE-A1- 19 510 182
- FR-A- 2 246 765
- FR-A- 2 615 575
- US-A- 4 473 260
- US-A- 5 248 203

## Description

### Background of the invention

The invention relates to a bearing according to the preamble of claim 1, and a method for transferring forces through a bearing of a wind turbine.

### Description of the related art

In general, larger wind turbines use special configuration, four-point contact ball bearings or crossed roller bearings for applications throughout the wind turbine. This is the case for pitch and yaw bearings especially,

The balls and/or rollers of the bearings carries loads applied to their supporting structures, comprising bearing rings, and provides low friction movement around the rotating axial axis of the bearing.

The mentioned types of bearings have distinct load paths for the rolling elements and are capable of carrying simultaneous moments and radial and axial loads. Hardened surfaces on inner and outer rings provide points of contact between stationary and moving elements of the bearing.

German patent application DE 195 10 182 A1 discloses, for use in a wind turbine, a yaw roller bearing where rollers (fig. 3, item 7) are positioned in an 45 degree angle relative to the resulting axial forces.

A disadvantage of the mentioned type of roller bearing is that, as pitch bearings primarily are influenced by axial loads, rollers positioned in a 45 degree angle are not loaded in their primarily direction and the load on each separate roller and on the bearing construction itself is therefore is increased.

From german patent de 38 00 729 62 it is known to provide a row in a angular contact bearing with rollers having a rotational axis in a first direction and further rollers having a rotational axis perpendicular to the first direction.

German patent application DE 102 57 195 A1 discloses a general purpose cross roller bearing, where one or more ball elements are inserted in the row of roller elements to adjust the gap between roller elements.

A disadvantage of the described bearings is that for large scale wind turbine bearings carrying great loads, inertia forces between adjacent roller elements results in increased deterioration of the bearing and a reduction of its lifetime. Further roller contact angles, which is not in the direction of the loading compromises the life expectancy. As an example the maximum moment on a modem 3 MW wind turbine is approximately 8,000 kNm.

It is an object of the invention to provide technique without the above mentioned disadvantages and especially it is an object to simplify the construction of the bearings and hereby increase their operational reliability.

### The invention

The invention relates to a bearing with at least one row of rolling elements, where at least one of said at least one row of rolling elements comprise a plurality of first rolling elements adapted for substantially transferring axial forces, and a plurality of second rolling elements adapted for substantially transferring radial forces, wherein at least one of said at least one row of rolling elements comprises means for separating rolling elements, wherein said means for separating rolling elements comprises one or more cages for retaining said rolling elements, where said one or more cages comprise a pocket adapted for allowing the rolling element to be displaced in the longitudinal direction of said row of elements.

Hereby it is achieved that the rolling elements are separated and retained in a desired position in relation to adjacent rolling elements and in relation to the total construction of the bearing, and the pocket that allows the rolling element to be displaced in the longitudinal direction of said row of elements, thereby reducing friction of the bearing, in particular by relatively small angular movements of the bearing. By using separate rolling elements for transferring axial and radial forces respectively in a bearing it is ensured that the bearing can be dimensioned properly in order to transfer forces acting on the bearing.

It is also ensured that said separate rolling elements of a bearing are substantially only transferring forces that it is designed to whereby wear and tear on the bearing is minimized.

Furthermore it is ensured that the number of rows of rolling elements can be minimized whereby the construction of the bearing is simplified and even further the production and installation costs can be reduced.

In preferred embodiment a of the invention said first rolling elements have a rotational axis directed substantially perpendicular to the rotational axis of said bearing. Hereby it is ensured that said first rolling elements are transferring moments and primarily axial forces acting on structures attached to the bearing and that the bearing can be designed to handle said moments and forces.

In another preferred embodiment of the invention said second rolling elements have a rotational axis directed substantially in parallel to the rotational axis of said bearing. Hereby it is ensured that said second rolling elements are transferring primarily radial forces acting on structures attached to the bearing and that the bearing can be designed to handle said forces.

In another preferred embodiment of the invention said first rolling elements are different from said second rolling elements. Hereby it is ensured that axial and radial forces acting on the bearing are transferred to the bearing supporting structures substantially by separate elements whereby the design of the bearing and the bearing supporting structures can be simplified.

In another of the invention said bearing comprises at least two rows of rolling elements. Hereby it is ensured that the bearing structure can be better stabilized and optimized regarding distribution of moments and forces acting on the bearing, slip in the bearing etc.

The rolling elements may have any arbitrary profile, however according to one aspect of the invention the rolling elements are substantially cylindrical rollers such as crowned rollers or ball rollers. Hereby it is ensured that the bearing can be designed to transfer maximal load in desired directions and hereby utilizing maximal capacity of the bearing to specific purposes.

In another preferred embodiment of the invention said rolling elements make contact with supporting structures such as bearing rings on raceways. It is herby ensured that the contact between rolling elements and supporting structures is on hardened structures designed to be able to handle the resulting moments and forces and designed to minimize wear and tear on said supporting structures.

In another preferred embodiment of the invention the ratio between the number of said first rolling elements and the number of said second rolling elements is in the range from 1:2 to 1:50, more preferred in the range from 1:5 to 1:20 such as 1:8. Hereby it is ensured that the bearing can be designed to transfer the actual radial and axial forces acting on the bearing also taking into account the relationship in size between said forces.

Another preferred embodiment of the invention relates to a wind turbine comprising a bearing as outlined above. The bearing is very suitable for heavy duty bearings for wind turbines, especially bearings which are often subjected to small angular movements.

In another preferred embodiment of the invention said bearing is a pitch bearing for pitching one or more blades of said wind turbine in relation to a hub of said wind turbine. Hereby it is ensured that the said pitch bearing can be designed to handle the forces acting on a wind turbine rotor blade to hub connection ensuring that the control of the pitch of the rotor blade can be done easily and accurate. Furthermore it is ensured that the bearing can be designed and optimized to specific operational parameters such as working range. By working range is meant the angle range at which said bearing is used e.g. a non-full rotational range such as 90 degrees. As an example pitch motions are often in the range of 20 degrees, and small corrections of the pitch angle, i.e. pitch motions of up to 5 degrees, are common.

In another preferred embodiment of the invention said bearing is a yaw bearing for yawing a nacelle of said wind turbine in relation to a tower of said wind turbine. Hereby it is ensured that the said yaw bearing can be designed to handle the forces acting on a wind turbine nacelle to tower connection ensuring that the control of the yaw of the nacelle can be done easily and accurate.

By longitudinal direction of said row of elements is meant the direction of rolling for the rolling elements i.e. the direction of its raceway. For a circular bearing that is a direction that is tangential to the periphery (circular arch) of the bearing.

The wider diameter of the pocket dᵢ compared to the diameter of the rolling element dᵣ allows a higher range of rolling motion for the rolling element before reaching the walls of said cage, instead of sliding due to different velocity of raceways for axial and radial rollers respectively.

Especially it is ensured for bearings with motion back and forth around some average point, such as a pitch bearing where motion is not a repeated 360 degree turn, that the radial rolling element retained in said cage comprising a pocket can roll freely within the limits of the pocket.

Furthermore the invention also relates to a method for transferring forces through a comprising the steps of providing the bearing with at least one row of rolling elements, where at least one of said at least one row of rolling elements comprises a plurality of first rolling elements adapted for substantially transferring axial forces, and a plurality of second rolling elements adapted for substantially transferring radial forces, further comprising the additional step of providing at least one of said at least one row of rolling elements with means for separating rolling elements, wherein said means for separating rolling elements comprises one or more cages for retaining said rolling elements, where said one or more cages comprise a pocket adapted for allowing the rolling element to be displaced in the longitudinal direction of said row of elements, wherein said first rolling elements have a rotational axis directed substantially perpendicular to the rotational axis of said bearing.

Hereby an advantageous method is obtained in that relatively large loads may be transferred with relatively low friction, especially for small angular movements of the bearing.

### Figures

The invention will be described in the following with reference to the figures in which
- fig. 1: illustrates a large modem wind turbine including three wind turbine blades in the wind turbine rotor,
- fig. 2: illustrates schematically forces and moment acting on a wind turbine rotor blade pitch bearing
- fig. 3: illustrates a part of a cross section of a pitch bearing comprising ball rollers as known in the art,

- fig. 4a: illustrates schematically the principle of a conventional single row bearing comprising spacers,
- fig. 4b: illustrates schematically the principle of a conventional single row bearing comprising a cage,
- fig. 5: illustrates a part of a cross section of a wind turbine pitch bearing comprising rollers as known in the art,
- fig. 6: illustrates schematically the principle of one embodiment of the invention as a crossed roller bearing comprising a combination of spacers and cages,
- fig. 7a: illustrates schematically the principle of a bearing according to one embodiment of the invention with a cage comprising a pocket,
- fig. 7b: illustrates schematically the principle of another embodiment of the invention as a crossed roller bearing comprising a combination of spacers and cages comprising a pocket,
- fig. 8: illustrates schematically the principle of a bearing according to another embodiment of the invention comprising two rows of crossed rollers comprising spacers and cages comprising a pocket, and
- fig. 9: illustrates for one embodiment of the invention a bearing according to the invention.

### Detailed description

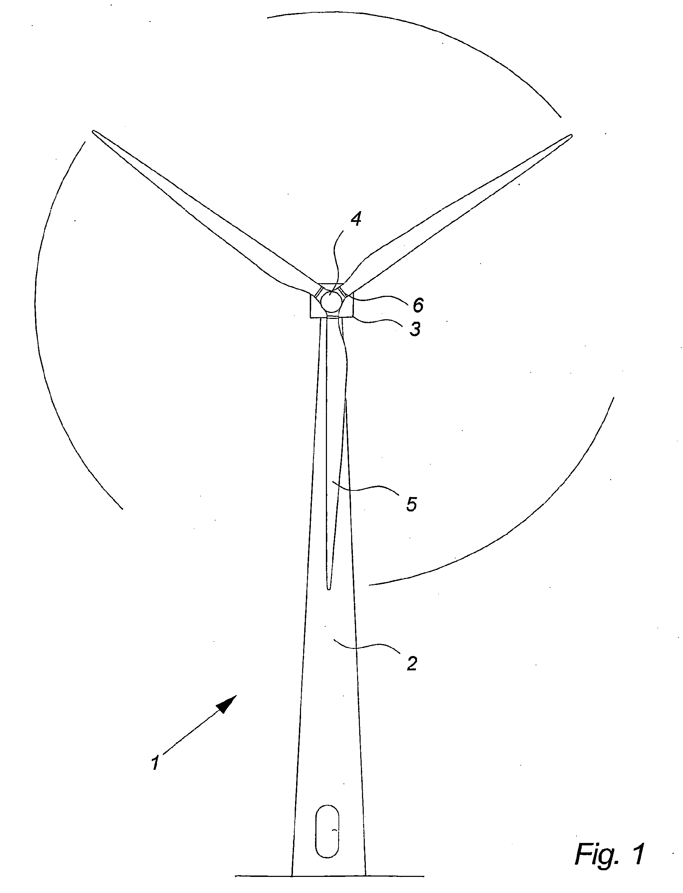

Fig. 1 illustrates a modem wind turbine 1 with a tower 2 and a wind turbine nacelle 3 positioned on top of the tower.

The wind turbine rotor, comprising at least one blade such as three wind turbine blades 5 as illustrated, is connected to the hub 4 through pitch mechanisms 6. Each pitch mechanism includes a blade bearing and individual pitch actuating means which allows the blade to pitch. The pitch process is controlled by a pitch controller.

As indicated on the figure, wind over a certain level will activate the rotor and allow it to rotate in a substantially perpendicular direction to the wind. The rotation movement is converted to electric power which usually is supplied to the utility grid as will be known by skilled persons within the area.

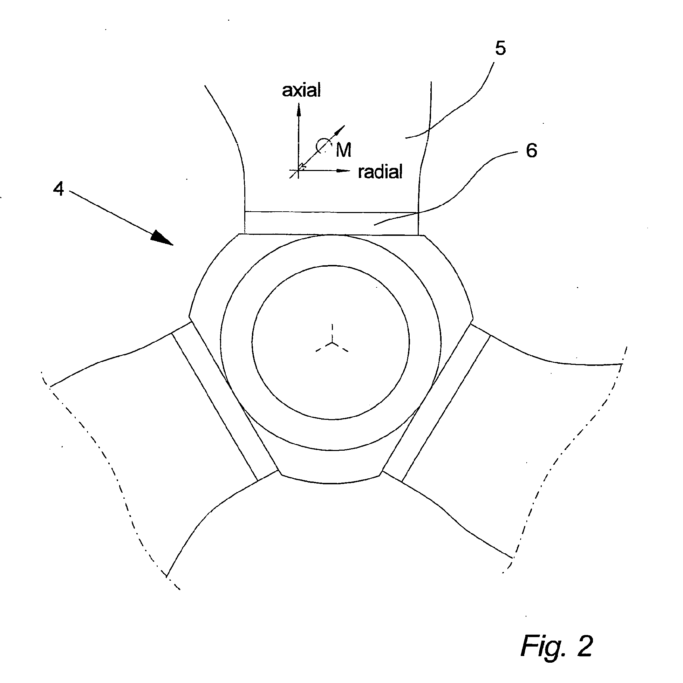

Fig. 2 illustrates a front view of a wind turbine hub 4. Wind turbine rotor blades 5 are connected to the hub 4 through a pitch mechanism 6 comprising pitch bearings that supports the rotor blades 5 to forces acting in both axial (longitudinal) and radial direction as well as to moments M as indicated on the figure.

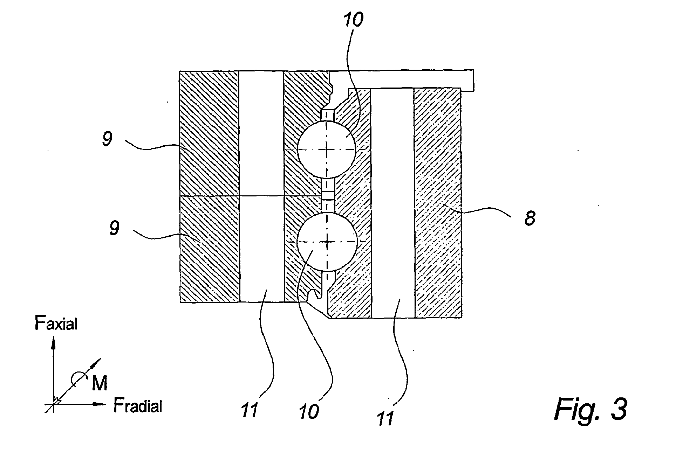

Fig. 3 schematically illustrates parts of a cross section of one embodiment of a double row ball bearing as used in wind turbines 1 known in the art.

The bearing comprise a nose bearing ring 8, a split C-bearing ring 9 and two rows of ball rolling elements 10 managing bending moments and axial and radial forces. The directions of the applied moment and forces are indicated by arrows on the figure.

Furthermore the bearing comprise through holes 11 for attachment to its supporting structures by attachment means such as screws, studs, bolts or rivets.

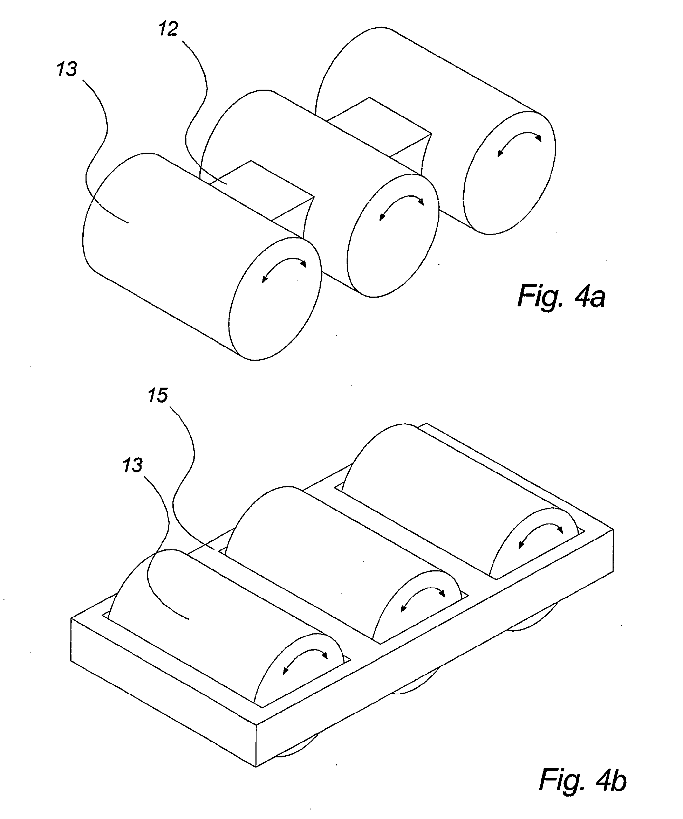

Fig. 4a illustrates schematically the principle of spacers 12 used in one embodiment of a conventional roller bearing. Spacers 12 are located in between rolling elements 13 and are formed as to substantially fit the shape of its adjacent rolling elements.

In one embodiment of the invention rolling elements 13 are formed as crowned rollers i.e. rollers whose diameter is intentionally larger in the middle than at the ends. Crowning of the rolling elements is expected to reduce roller edge loading.

This type of roller bearings can support high loads. In many embodiments this type of bearings can be taken apart and can therefore be fitted and dismantled more easily.

Spacers 12 can be made of various wear well materials such as aluminum, brass, stainless steel, chrome steel, bronze, synthetic materials etc. and is used to separate and position the rolling elements 13 at substantially equal intervals around the bearing raceways 14 in order to maximize efficiency and minimize wear. Furthermore spacers 12 reduce vibratory impulses which might be imposed by the surfaces of the races.

Fig. 4b illustrates schematically the principle of a cage 15 comprising rolling elements 13 used in one embodiment of a conventional roller bearing.

Cages 15 have the same purpose of separating and positioning as said spacers 12 and can be made of the same said materials.

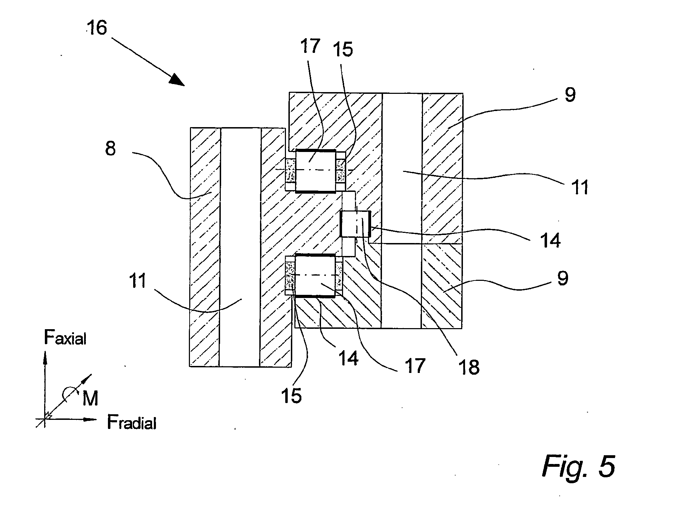

Fig. 5 illustrates schematically parts of cross sections of one embodiment of a 3-row roller pitch bearing 16 as used in wind turbines 1 known in the art.

The bearing comprise a nose bearing ring 8, a split C-bearing ring 9, rows of rolling elements managing axial forces 17 and rows of rolling elements managing radial forces 18 and where axial and radial rolling elements are positioned substantially perpendicular to each other. Rolling elements 17, 18 are comprised in cages 15.

Bearing raceways 14 on nose bearing ring 8 and C-bearing rings 9 ensure that wear and tear from the contact between rolling elements 17, 18 and bearing rings 8, 9 is minimized resulting in a prolonged lifetime for the bearing. Of course the opposite lay-out is equally possible, i.e. the nose bearing ring / C-bearing rings can be used both as outer ring and inner ring.

Furthermore the bearing comprise through holes 11 for attachment of its supporting structures by attachment means such as screws, studs, bolts or rivets.

The directions of the applied axial and radial forces are indicated by arrows on the figure.

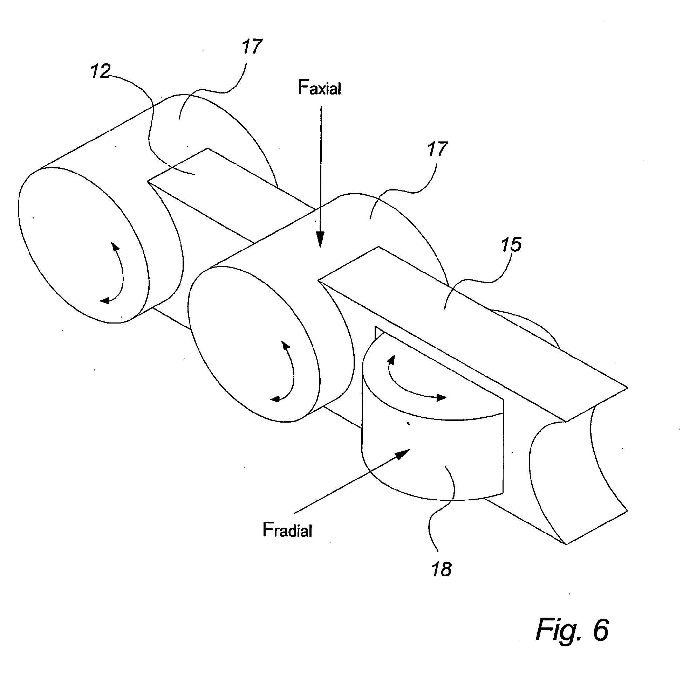

Fig. 6 illustrates for one embodiment of the invention the principle of a cross roller bearing 16 where a single row of rolling elements comprise rolling elements that manage axial forces 17 and rolling elements that manage radial forces 18 in combination.

Compared to a conventional bearing comprising only rolling elements that manage axial forces 17, a number of rolling elements are exchanged by substantially perpendicular positioned radial rolling elements 18. Spacers 12 between two axial rolling elements 17 is not modified and has a similar form compared to a conventional bearing A special formed cage 15 supporting one or more rolling elements 18 is formed as to fit the shapes of its adjacent rolling elements 17.

For another embodiment of the invention, spacers 12 and/or cages 15 are used to separate and position some or all rolling elements 17, 18.

For one embodiment of the invention every second rolling element is an axial rolling element 17 and every other second rolling element is a radial rolling element 18 i.e. the ratio between the number of rolling elements managing axial forces 17 and the number of rolling elements managing radial forces 18 is 1:1.

For other preferred embodiments of the invention the ratios between the number of rolling elements managing axial forces and the number of rolling elements managing radial forces are more than 1:1, preferred in the range from 1:2 to 1:50, more preferred in the range from 1:5 to 1:20 such as 1:8 i.e. the number of axial rolling elements 17 is greater than the number of radial rolling elements 18.

For a bearing according to the present invention, said ratio is determined depending on demands to loadings, moments and deflections in axial and radial direction respectively that the bearing must be able to manage.

In a rotating bearing of the invented type, the velocity of the center of the radial rolling elements 18 may be different than the velocity of the center of the axial rolling elements 16 e.g. due to different length in raceways 14. As the radial rolling elements are held in position by cages this may result in a partly sliding instead of rolling motion for said radial rolling elements.

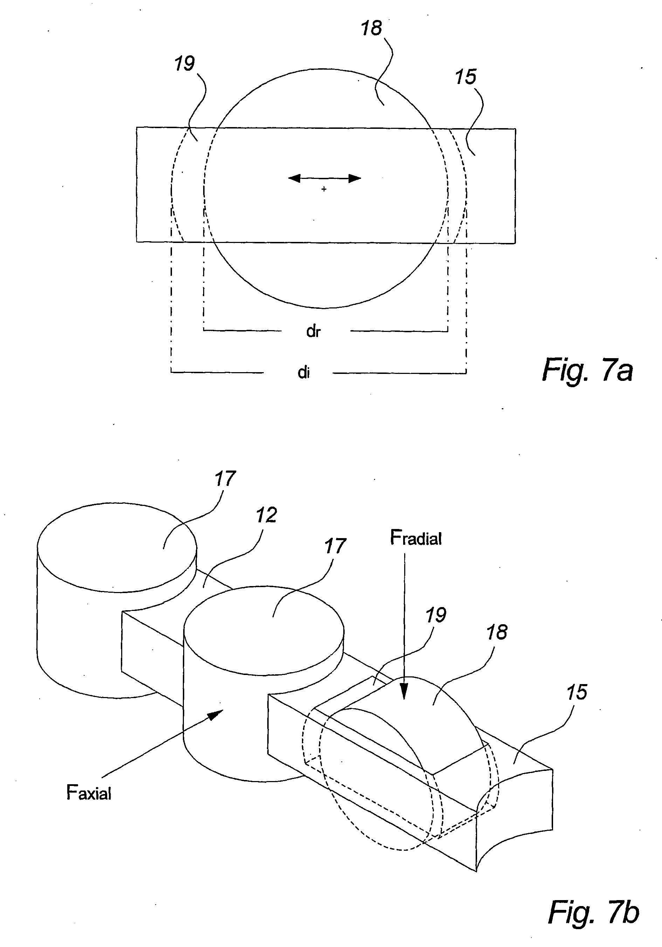

Fig. 7a and fig. 7b illustrates for another embodiment of the invention the principal construction of one row of a bearing comprising axial rolling elements 17 separated by spacers 12 and cages 15 comprising radial rolling elements 18.

Fig. 7a illustrates a frontal view of one cage 15 comprising one radial rolling element 18 and where the cage 15 is constructed in a way that it includes a pocket 19 i.e. room for free play for the radial roller 18 in the direction of movement as indicated by arrows. The diameter dᵢ of the pocket 19 in the cage 15 is wider than the diameter dᵣ of the radial rolling element 18. The wider diameter of dᵢ compared to dᵣ enables a higher degree of rolling motion for the radial rolling element 18 instead of sliding due to the velocity of the center of the radial rolling elements 18 may be different than the velocity of the center of the axial rolling elements 16 e.g. due to different length in raceways 14. Hereby the radial rolling element 18 can move freely over a distance range before reaching the walls of its surrounding cage 15.

It is currently expected that the maximum play will be the diameter of the radial rolling element (i.e. dᵢ = 2*dᵣ), but in many cases the play will be in the interval of 0.1 - 0.5 (i.e. dᵢ = 1.1*dᵣ to 1.5*dᵣ), and often the play will be approximately 0,25 (i.e. dᵢ = 1.25*dᵣ)_{.} As an example the bearing may be a pitch bearing having a diameter of 1 m to 5 m. With a pitch bearing diameter of 2 m, a pitch motion of e.g. 5 degrees equals a distance of less than 9 cm, which the rolling elements must travel. With the mentioned play, the radial rolling elements may travel at least a part of this distance freely.

Fig. 7b illustrates part of one row of a bearing comprising axial rolling elements 17, spacers 12 separating said axial rolling elements 17, and radial rolling elements 18 comprised in cages 15 comprising pockets 19 enabling free move for the radial rolling element 18.

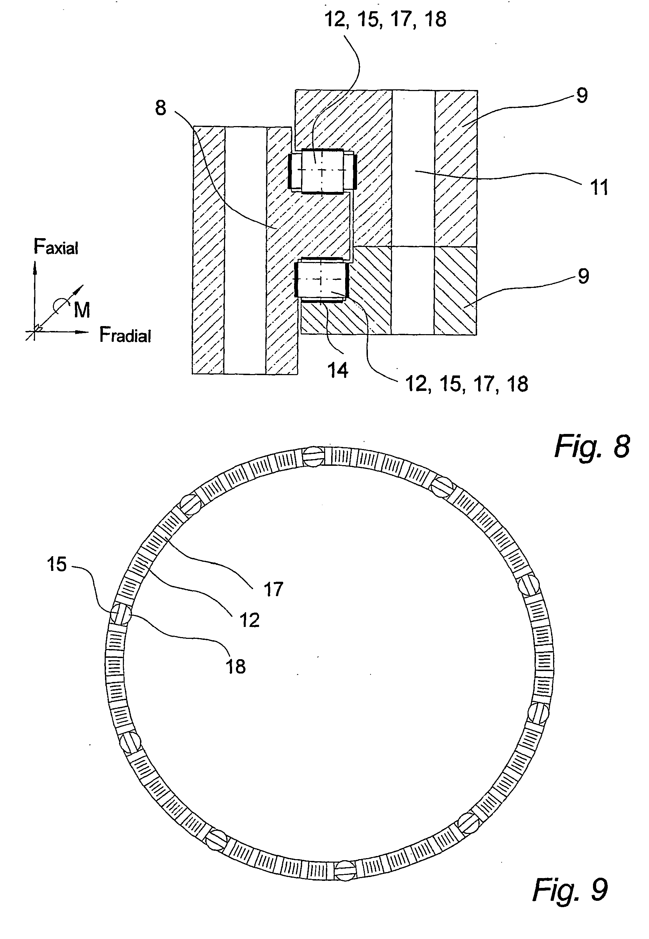

Fig. 8 illustrates parts of a cross section of a pitch bearing according to one embodiment of the invention.

The bearing comprises a nose bearing ring 8, a split C-bearing ring 9 and rows of rolling elements 17, 18 managing both axial and radial forces together with spacers 12 and cages 15, where said axial and radial rolling elements 17, 18 are positioned substantially perpendicular to each other. The ratio between the number of axial and radial rolling elements 17, 18 can be e.g. in the range between 1:1 to 1:100, preferred in the range from 1:2 to 1:50, more preferred in the range from 1:5 to 1:20 such as 1:8 i.e. the number of axial rolling elements 17 is greater than the number of radial rolling elements 18.

The directions of the applied axial and radial forces are indicated by arrows on the figure.

Furthermore the bearing comprise through holes 11 for attachment on its supporting structures by attachment means such as screws, studs, bolts or rivets.

As can be seen on the figure hardened bearing raceways 14 on nose and C-bearing rings 8, 9 ensure that wear and tear from the contact between rolling elements 17, 18 and bearing rings 8, 9 is minimized.

Fig. 9 illustrates schematically one embodiment of the invention where a row of rolling elements 13 comprises both axial and radial rolling elements 17, 18 and is forming a full 360 degree circle. For this embodiment the ratio between the number of axial and radial rolling elements 17, 18 is 1:4.

The skilled person will find no difficulty in assessing a suitable number of rolling elements for a given application. For a pitch bearing having a diameter in the range of 1 to 5 m, the number of rolling elements in each row would typically be from 50 to 500 rolling elements per row. Similarly it will be straight forward for the skilled person to establish suitable dimensions of the rolling elements for a given application. For pitch bearings of the mentioned size, suitable dimensions are from 30 mm to 150 mm in length and diameter.

**List**
- 1.: Wind turbine
- 2.: Tower
- 3.: Nacelle
- 4.: Hub
- 5.: Rotor blade
- 6.: Pitch mechanism
- 7.: Pitch bearing
- 8.: Nose bearing ring
- 9.: Split C-bearing ring
- 10.: Ball rolling elements
- 11.: Through holes
- 12.: Spacers
- 13.: Rolling elements
- 14.: Bearing raceway
- 15.: Cage
- 16.: Cross roller pitch bearing
- 17.: Rolling elements managing axial forces
- 18.: Rolling elements managing radial forces
- 19.: Pocket in cage

## Claims

1. A bearing for allowing a rotational movement about an axis, with at least one row of rolling elements where at least one of said at least one row of rolling elements comprise a plurality of first rolling elements (17) adapted for substantially transferring axial forces, and a plurality of second rolling elements (18) adapted for substantially transferring radial forces,
said at least one row of rolling elements comprising first and second rolling elements (1,7,18), comprises means for separating said rolling elements (17, 18), wherein said means for separating rolling elements (17, 18) comprises one or more cages (15) for retaining said rolling elements (17, 18), at least some of one or more cages (15) **characterized in that** at least some of one or more cages (15) comprise a pocket (19) adapted for allowing the rolling element to be displaced with respect to the means for separating rolling elements (17, 18) in the longitudinal direction of said row of elements and wherein said first rolling elements (17) have a rotational axis directed substantially perpendicular to the rotational axis of said bearing.

2. A bearing according to claim 1, wherein said second rolling elements (18) have a rotational axis directed substantially in parallel to the rotational axis of said bearing.

3. A bearing according to claim 1, wherein said first rolling elements (17) are different from said second rolling elements (18).

4. A bearing according to claim 1, wherein said bearing comprises at least two rows of rolling elements.

5. A bearing according to any of the preceding claims, wherein said rolling elements (17, 18) are substantially cylindrical rollers such as crowned rollers or ball rollers (10).

6. A bearing according to any of the preceding claims, wherein said rolling elements (17, 18) make contact with supporting structures such as bearing rings on raceways (14).

7. A bearing according to any of the preceding claims, wherein the ratio between the number of said first rolling elements (17) and the number of said second rolling elements (18) is in the range from 1:2 to 1:50, more preferred in the range from 1:5 to 1:20 such as 1:8 per row.

8. A wind turbine (1) comprising a bearing according to any of the preceding claims.

9. A wind turbine (1) according to claim 8, wherein said bearing is a pitch bearing (7) for pitching one or more blades (5) of said wind turbine (1) in relation to a hub (4) of said wind turbine (1).

10. A wind turbine (1) according to claim 8, wherein said bearing is a yaw bearing for yawing a nacelle (3) of said wind turbine (1) in relation to a tower (2) of said wind turbine (1).

11. A method for transferring forces through a bearing for allowing a rotational movement about an axis, comprising the steps of providing the bearing with at least one row of rolling elements, where at least one of said at least one row of rolling elements comprises a plurality of first rolling elements (17) adapted for substantially transferring axial forces, and a plurality of second rolling elements (18) adapted for substantially transferring radial forces,
the additional step of providing said at least one row of rolling elements comprising first and second rolling elements (17,18), with means for separating said rolling elements (17, 18), wherein said means for separating rolling elements (17, 18) comprises one or more cages (15) for retaining said rolling elements (17, 18), **characterized in that** at least some of one or more cages (15) comprise a pocket (19) adapted for allowing the rolling element (17, 18) to be displaced with respect to the means for separating rolling elements (17, 18) in the longitudinal direction of said row of elements and wherein
said first rolling elements 17 have a rotational axis directed substantially perpendicular to the rotational axis of said bearing.

## Patentansprüche

1. Lager, das eine Drehbewegung um eine Achse gestattet, mit wenigstens einer Reihe abrollender Elemente, wobei wenigstens eine der wenigstens eine Reihen abrollender Elemente mehrere erste abrollende Elemente (17), die dafür eingerichtet sind, im Wesentlichen axiale Kräfte zu übertragen, und mehrere zweite abrollende Elemente (18), die dafür eingerichtet sind, im Wesentlichen radiale Kräfte zu übertragen, umfasst, wobei die wenigstens eine Reihe abrollender Elemente, die erste und zweite abrollende Elemente (17, 18) umfasst, Mittel zum Auseinanderhalten der abrollenden Elemente (17, 18) umfasst, wobei die Mittel zum Auseinanderhalten von abrollenden Elementen (17, 18) einen oder mehrere Käfige (15) zum Halten der abrollenden Elemente (17, 18) umfassen, **dadurch gekennzeichnet, dass** wenigstens einige der einen oder mehreren Käfige (15) eine Tasche (19) umfassen, die dafür eingerichtet ist, es dem abrollenden Element zu gestatten, relativ zu den Mitteln zum Auseinanderhalten der abrollenden Elemente (17, 18) in der Längsrichtung der Reihe von Elementen verschoben zu werden, und wobei die ersten abrollenden Elemente (17) eine Rotationsachse haben, die im Wesentlichen senkrecht zur Rotationsachse des Lagers ausgerichtet ist.

2. Lager nach Anspruch 1, bei dem die zweiten abrollenden Elemente (18) eine Rotationsachse haben, die im Wesentlichen parallel zur Rotationsachse des Lagers ausgerichtet ist.

3. Lager nach Anspruch 1, bei dem die ersten abrollenden Elemente (17) von den zweiten abrollenden Elementen (18) verschieden sind.

4. Lager nach Anspruch 1, bei dem das Lager wenigstens zwei Reihen abrollender Elemente umfasst.

5. Lager nach einem der vorhergehenden Ansprüche, bei dem die abrollenden Elemente (17, 18) im Wesentlichen zylindrische Walzen sind, wie etwa ballige Walzen oder Kugelrollen (10).

6. Lager nach einem der vorhergehenden Ansprüche, bei dem die abrollenden Elemente (17, 18) in Kontakt mit tragenden Strukturen wie etwa Tragringen auf Laufringen (14) sind.

7. Lager nach einem der vorhergehenden Ansprüche, bei dem das Verhältnis zwischen der Zahl der ersten abrollenden Elemente (17) und der Zahl der zweiten abrollenden Elemente (18) pro Reihe im Bereich von 1:2 bis 1:50 und noch bevorzugter im Bereich von 1:5 bis 1:20, wie etwa 1:8, liegt.

8. Windturbine (1), die ein Lager gemäß einem der vorhergehenden Ansprüche umfasst.

9. Windturbine (1) nach Anspruch 8, bei der das Lager ein Pitch-Lager (7) für eine Pitch-Drehung eines oder mehrerer Blätter (5) der Windturbine (1) relativ zu einer Nabe (4) der Windturbine (1) ist.

10. Windturbine (1) nach Anspruch 8, bei der das Lager ein Gierlager für eine Gierbewegung einer Gondel (3) der Windturbine (1) relativ zu einem Turm (2) der Windturbine (1) ist.

11. Verfahren zur Übertragung von Kräften über ein Lager, um eine Drehbewegung um eine Achse zu ermöglichen, das die folgenden Schritte umfasst: Ausstatten des Lagers mit wenigstens einer Reihe abrollender Elemente, wobei wenigstens eine der wenigstens eine Reihen abrollender Elemente mehrere erste abrollende Elemente (17), die dafür eingerichtet sind, im Wesentlichen axiale Kräfte zu übertragen, und mehrere zweite abrollende Elemente (18), die dafür eingerichtet sind, im Wesentlichen radiale Kräfte zu übertragen, umfasst, sowie den zusätzlichen Schritt, die wenigstens eine Reihe abrollender Elemente, die erste und zweite abrollende Elemente (17, 18) umfasst, mit Mitteln zum Auseinanderhalten der abrollenden Elemente (17, 18) auszustatten, wobei die Mittel zum Auseinanderhalten von abrollenden Elementen (17, 18) einen oder mehrere Käfige (15) zum Halten der abrollenden Elemente (17, 18) umfassen, **dadurch gekennzeichnet, dass** wenigstens einige der einen oder mehreren Käfige (15) eine Tasche (19) umfassen, die dafür eingerichtet ist, es dem abrollenden Element zu gestatten, relativ zu den Mitteln zum Auseinanderhalten der abrollenden Elemente (17, 18) in der Längsrichtung der Reihe von Elementen verschoben zu werden, und wobei die ersten abrollenden Elemente (17) eine Rotationsachse haben, die im Wesentlichen senkrecht zur Rotationsachse des Lagers ausgerichtet ist.

## Revendications

1. Palier destiné à permettre un mouvement dé rotation autour d'un axe, avec au moins une rangée d'éléments roulants, où au moins une de ladite au moins une rangée d'éléments roulants comprend une pluralité de premiers éléments roulants (17) adaptés pour sensiblement transférer des forces axiales, et une pluralité de seconds éléments roulants (18) adaptés pour sensiblement transférer des forces radiales, ladite au moins une rangée d'éléments roulants comprenant des premiers et seconds éléments roulants (17, 18) comprend des moyens pour séparer lesdits éléments roulants (17, 18), dans lequel lesdits moyens pour séparer les éléments roulants (17, 18) comprennent une ou plusieurs cages (15) pour retenir lesdits éléments roulants (17, 18), **caractérisé en ce qu'**au moins certaines parmi une ou plusieurs cages (15) comprennent une poche (19) adaptée pour permettre à l'élément roulant d'être déplacé par rapport aux moyens pour séparer les éléments roulants (17, 18) dans la direction longitudinale de ladite rangée d'éléments (17, 18) et dans lequel lesdits premiers éléments roulants (17) comportent un axe de rotation dirigé de façon sensiblement perpendiculaire à l'axe de rotation dudit palier.

2. Palier selon la revendication 1, dans lequel lesdits seconds éléments roulants (18) comportent un axe de rotation dirigé sensiblement en parallèle à l'axe de rotation dudit palier.

3. Palier selon la revendication 1, dans lequel lesdits premiers éléments roulants (17) sont différents desdits seconds éléments roulants (18).

4. Palier selon la revendication 1, dans lequel ledit palier comprend au moins deux rangées d'éléments roulants.

5. Palier selon une quelconque des revendications précédentes, dans lequel lesdits éléments roulants (17, 18) sont des rouleaux sensiblement cylindriques, tels que des rouleaux bombés ou des rouleaux à bille (10).

6. Palier selon une quelconque des revendications précédentes, dans lequel lesdits éléments roulants (17, 18) entrent en contact avec des structures de support, telles que des bagues de roulement sur des chemins de roulement (14).

7. Palier selon une quelconque des revendications précédentes, dans lequel le rapport entre le nombre desdits premiers éléments roulants (17) et le nombre desdits seconds éléments roulants (18) est dans la plage de 1:2 à 1:50, idéalement dans la plage de 1:5 à 1:20, tel que 1:8 par rangée.

8. Éolienne (1) comprenant un palier selon une quelconque des revendications précédentes.

9. Éolienne (1) selon la revendication 8, dans laquelle ledit palier est un palier de commande de pas (7) pour commander le pas d'une ou de plusieurs aubes (5) de ladite éolienne (1) par rapport à un moyeu (4) de ladite éolienne (1).

10. Éolienne (1) selon la revendication 8, dans laquelle ledit palier est un palier de commande de lacer pour commander le lacet d'une nacelle (3) de ladite éolienne (1) par rapport à une tour (2) de ladite éolienne (1).

11. Procédé pour transférer des forces par l'intermédiaire d'un palier destiné à permettre un mouvement de rotation autour d'un axe, comprenant les étapes consistant à fournir au palier au moins une rangée d'éléments roulants, où au moins une de ladite au moins une rangée d'éléments roulants comprend une pluralité de premiers éléments roulantes (17) adaptés pour sensiblement transférer des forces axiales, et une pluralité de seconds éléments roulants (18) adaptés pour sensiblement transférer des forces radiales,
l'étape supplémentaire consistant à fournir à ladite au moins une rangée d'éléments roulants comprenant des premiers et seconds éléments roulants (17, 18) des moyens pour séparer lesdits éléments roulants (17, 18), dans lequel lesdits moyens pour séparer les éléments roulants (17, 18) comprennent une ou plusieurs cages (15) pour retenir lesdits éléments roulantes (17, 18), **caractérisé en ce qu'**au moins certaines parmi une ou plusieurs cages (15) comprennent une poche (19) adaptée pour permettre à l'élément roulant d'être déplacé par rapport aux moyens pour séparer les éléments roulants (17, 18) dans la direction longitudinale de ladite rangée d'éléments et dans lequel lesdits premiers éléments roulants (17) comportent un axe de rotation dirigé de façon sensiblement perpendiculaire à l'axe de rotation dudit palier.
